# EUROPÄISCHE PATENTSCHRIFT

(11) **EP 2 165 033 B1**
(45) Veröffentlichungstag und Bekanntmachung des Hinweises auf die Patenterteilung: **20.07.2011**
(21) Anmeldenummer: 08760417.9
(22) Anmeldetag: 03.06.2008
(51) Int. Cl.: E05C 9/18, F16B 35/04, F16B 21/18

(54) **VERSCHLUSSBOLZEN**
CLOSURE BOLT
BOULON DE FERMETURE

(30) Priorität: 12.07.2007 DE 202007009750 U; 27.07.2007 DE 202007010599 U
(43) Veröffentlichungstag der Anmeldung: 24.03.2010
(73) Patentinhaber: SIEGENIA-AUBI KG, 57234 Wilnsdorf (DE)
(72) Erfinder: HEIML, Roland, A-4870 Vöcklamarkt (AT)
(86) Internationale Anmeldenummer: PCT/EP2008/056833
(87) Internationale Veröffentlichungsnummer: WO 2009/007179

(56) Entgegenhaltungen:
- DE-A1- 10 110 632
- DE-A1- 19 715 055
- DE-U1- 8 437 256

## Beschreibung

Die Erfindung betrifft einen Verschlussbolzen nach dem Oberbegriff des Anspruchs 1.

Derartige Verschlussvorrichtungen sind bereits bekannt. Aus der, noch unveröffentlichten deutschen Patentanmeldung 102006000063, ist ein Verschlussbolzen bekannt, bei dem ein Bundbolzen und eine drehbar daran angebrachte Rolle über eine Rastvorrichtung aneinander festgelegt sind. Dadurch kann die Rolle relativ zu dem Bundbolzen axial zu diesem verlagert werden.

Diese Verschlussvorrichtungen dienen beispielsweise der Verriegelung von Fenster und Türen. Die Verschlussbolzen sind Treibstangen zugeordnet, die über einen Treibstangenbeschlag längsverschiebbar an dem Flügel gelagert sind. Dem Verschlussbolzen sind an dem Rahmen ortsfest angebrachte Riegeleingriffe zugeordnet. Bei der Auslegung des Verschlussbolzens als Pilzbolzen ist die Rolle mit einem endseitig angebrachten nach außen vorstehenden Kragen versehen. Der Riegeleingriff weist einen Riegelschlitz auf, der so bemessen ist, dass der verjüngte Schaft der Rolle diesen durchtreten kann, der Kragen aber in der Verschlussstellung den Rand des Riegelschlitzes hintergreift.

Dadurch ist eine Verlagerung des Riegelzapfens senkrecht zu dem Riegeleingriff in dessen Verschlussstellung allenfalls begrenzt möglich, so dass ein Ausheben der Verriegelung bei einem Einbruch erschwert wird.

Der durch die DE 101 10 632 A1 bekannte Verschlussbolzen besteht aus einer drehbar an einem Bundbolzen gelagerten Rolle und einem diese tragenden Bundbolzen. Der Bundbolzen durchsetzt mit einem Befestigungsansatz eine Bohrung an der Treibstange. An dem Bundbolzen ist ein Bund vorgesehen, den eine Rolle hülsenartig umgreift. Die Rolle ist gegenüber dem Bundbolzen frei drehbar.

Ein Ausführungsbeispiel sieht vor, dass der Bund des Bundniets an dem freien Ende von einem verbreiterten Kopf begrenzt wird. Der Kopf ist so bemessen, dass dieser auch den Außendurchmesser der Rolle überkragt. Ein anderes Ausführungsbeispiel sieht dem entgegen vor, dass der Kopf an der Rolle angebracht ist.

Nachteilig ist es dabei, dass sich durch Herstellungstoleranzen und eine Verlagerung des Flügels relativ zum Rahmen nach einem Zeitablauf der Abstand der Verschlussbolzen und der Riegeleingriffe ändert und ein Zusammenwirken nicht mehr sichergestellt ist.

Aus dem Prospekt "MACO-Technogramm" - Seite 7 - vom März 2000 ist ein Verschlussbolzen bekannt, der ebenfalls einen Bundbolzen und eine daran drehbar gelagerte Rolle entsprechend dem zweiten Ausführungsbeispiel der DE 101 10 632 A1 vorsieht. Dabei ist die Rolle mit einem axialen Spiel gegenüber dem Bundbolzen versehen, durch das eine selbstständige Justierung der Rolle an einen geänderten Abstand zu dem Riegeleingriff erreicht werden soll.

Nachteilig bei dieser Ausgestaltung ist es, dass die selbstständige Verlagerung der Rollen allenfalls nur in engen Grenzen tatsächlich vorgenommen wird. Der Kopf des Verschlussbolzens muss nämlich die Einführschräge des diesem zugeordneten Riegeleingriffs treffen um eine Ausrichtbewegung zu erreichen. Dabei bewegt sich im Allgemeinen der Flügel relativ zum Rahmen dergestalt, dass dieser sich in Richtung der Schwerkraft absenkt, wodurch das Spiel zwischen Flügel und Rahmen an dem oberen horizontalen Flügelschenkel und damit der Abstand von Verschlussbolzen und Riegeleingriff vergrößert und am unteren horizontalen Flügelschenkel reduziert wird. Da aber auch die Rollen entsprechend der Schwerkraft verlagert werden, bewegt sich eine Rolle eines Verschlussbolzens am oberen horizontalen Flügelschenkel ebenfalls nach unten, also vom Riegeleingriff weg. Dem entsprechend ist die Justierung nur in begrenztem Maße wirksam.

Bei den letztgenannten Ausführungen sind jeweils plastische Verformungen zumindest eines der Einzelteile notwendig. Da die Verschlussbolzen in sehr großen Stückzahlen benötigt werden und die plastische Verformung sehr zeitaufwendig ist, bedeutet dies einen großen Kostenfaktor.

Aus der DE 84 37 256 U1 und der DE 197 15 055 A1 sind ebenfalls bereits Lösungen bekannt geworden, mit denen eine Anpassung der Verschlussbolzen an sich verändernde Abstände zu den Riegeleingriffen angepasst werden können. Diese bestehen aus an Rollen mit einer Gewindebohrung und einem mit einem Gewindezapfen versehenen Bundbolzen. Die Rolle ist dabei jeweils schwergängig an dem Bundbolzen festgelegt.

Die notwendig manuelle Verstellung ist dabei an jedem einzelnen Verschlussbolzen vorzunehmen und bedingt durch die verwendeten Gewinde vergleichsweise zeitaufwendig. Zudem ist die Rolle nicht in dem Sinne an dem Bundbolzen angebracht, dass ein Zusammenwirken mit dem Riegeleingriff mit verminderter Reibung erfolgt und die Herstellung ist durch das benötigte Gewinde sehr aufwendig.

Daher besteht die Aufgabe, einen Verschlussbolzen insbesondere nach Art eines Pilzbolzens dahingehen weiter zu bilden, dass sich dieser einfach herstellen lässt und dabei über die Rolle Verschleißspuren an den Riegeleingriffen vermeidet.

Zur Lösung dieser Aufgabe sieht die Erfindung die Maßnahmen des kennzeichnenden Teils des Anspruchs 1 vor.

Dadurch, dass die Rastvorrichtung aus einer Hülse besteht, die mit von der Mantelfläche in Richtung des Bundbolzens vorstehenden Rastzungen versehen ist und welche in eine Einschnürung des Bundbolzens eingreifen, wird eine sehr einfache Montage erreicht, die auf Verformung des Bundbolzens oder der Rolle verzichtet. Die Montagezeit wird dadurch stark vermindert, was in Anbetracht der großen Stückzahlen sehr vorteilhaft ist. Unter Einschnürung im Sinne des Anspruchs ist dabei keineswegs nur eine umlaufende Durchmesserverringerung zu verstehen. Vielmehr können auch partielle Einbuchtungen oder Ausnehmungen im Umfang des Bundbolzens, welche einen Eingriff für die Rastzungen der Hülse bilden, als Einschnürung verstanden werden.

In dieser letzten Ausführungsform würde sich allerdings die Hülse nicht mehr mit der Rolle mitdrehen, sondern relativ zum Bundbolzen stillstehen. Die Rollendrehung wird dadurch schwergängig oder, wenn die Hülse ohne Vorspannung ausgeführt wird, besteht keine axiale Fixierung mehr.

Nach einer Weiterbildung ist vorgesehen, dass die Einschnürung des Bundbolzens in einem zylindrischen Abschnitt angebracht ist, so dass die Hülse ebenfalls eine zylindrische Grundstruktur aufweist, da der verbleibende Kopf des Bundbolzens den gleichen Durchmesser wie der sich an die Einschürung anschließende Schaft hat.

Vorteilhaft ist es auch, wenn an der Hülse mehrere, vorzugsweise aber drei über den Umfang verteilte Zungen angebracht sind. Dadurch ist eine sichere Abstützung der Hülse an dem Bundbolzen gewährleistet und ein Kippen der Hülse an dem Bundbolzen wird erschwert. Weiteres wird durch das Abziehen der Rolle vom Bundbolzen verhindert, was den Einbruchschutz beim Fenster verbessert.

Dadurch, dass der Bundbolzen einen Bund aufweist, der im Durchmesser so bemessen ist, dass sich die Rolle daran abstützt, liegt die Rolle nicht auf einer ggf. vorhandenen Treibstange an und bildet zusammen mit dem Bundbolzen ein einziges, zu handhabendes Bauteil. Dieses kann in großen Stückzahlen in einer dafür vorgesehenen Vorrichtung hergestellt und anschließend in Treibstangenbeschlägen verbaut werden.

Um eine Anpassung des Anpressdrucks des Verschlussbolzens vornehmen zu können weist der Bundbolzen einen zu dem Abschnitt exzentrisch verlaufenden Befestigungsansatz und der Bund eine Außenkontur auf, die einen Werkzeugangriff ermöglicht.

Vorteilhaft ist es auch, wenn der Bund einen Sechskant bildet. Damit können handelsübliche Werkzeuge verwendet werden.

Eine Weiterbildung sieht vor, dass der Bundbolzen an seiner Stirnfläche einen Werkzeugeingriff aufweist und der Bundbolzen einen zu dem Abschnitt exzentrisch verlaufenden Befestigungsansatz aufweist. Diese, zum Anspruch 5 alternative Ausgestaltung, verzichtet auf den Werkzeugangriff an dem Bund und verlagert diesen in den Kopf des Bundbolzens.

Schließlich ist noch vorgesehen, dass die Hülse eine Höhe aufweist, welche kleiner bemessen ist als eine dem Außendurchmesser der Hülse zugeordnete Sacklochbohrung der Rolle. Dadurch ist die Rolle relativ zu der Hülse axial verschiebbar und kann sich ggf. selbstständig an ein abweichendes Abstandmaß des Rahmens zu einem Flügel anpassen. Diese Ausgestaltung soll eine der DE 102006000063 entsprechende Funktion ermöglichen.

Es ist vorgesehen, dass die Hülse geschlitzt ausgeführt ist und dass der Außendurchmesser der Hülse geringfügig größer ausgeführt ist als der Innendurchmesser der Rolle. Die Hülse hat durch den Schlitz ein federndes Verhalten. Die Rolle ist dadurch gegenüber dem Bundbolzen mit geringer Kraft stufenlos axial verschiebbar. Die eingestellte Position der Rolle relativ zum Bundbolzen bleibt durch die Reibung zwischen Hülse und Rolle erhalten, auch dann, wenn der Verschlussbolzen eine senkrechte Lage einnimmt. Durch das federnde Verhalten der Hülse können auch Fertigungstoleranzen von Außendurchmesser Hülse und Innendurchmesser Rolle ausgeglichen werden. Dadurch sind gröbere Toleranzen der Bauteile und somit eine kostengünstigere Fertigung möglich.

Zweckmäßig ist es dabei, wenn an der Mantelfläche der Hülse nach außen vorstehende Rastnasen und zumindest zwei in der Wandfläche der Sachlochbohrung angebrachte Nuten vorgesehen sind. Dies erlaubt eine Festlegung der Rolle relativ zu dem Bundbolzen. Dadurch kann die Anpassung an verschiedene Abstandsabmessungen dauerhaft vorgenommen werden und bleibt auch dann erhalten, wenn der Verschlussbolzen eine senkrechte Lage einnimmt, wie dies in der 102006000063 beschrieben ist.

Zu einer einfachen Herstellung der Einzelteile trägt bei, dass die Rastzungen einteilig mit der Hülse geformt sind. Es ist noch vorgesehen, dass die Hülse aus einem Federstahl hergestellt ist. Diese Materialauswahl erlaubt eine besonders belastungsfähige Auslegung des Verschlussbolzens.

Abschließend ist es zweckmäßig, dass der Durchmesser an dem Bund der Rolle und der Durchmesser des Schaftes abgestimmt sind. Unter abgestimmt wird dabei verstanden, dass die Durchmesser eine spielarme aber drehbare Verbindung zulassen.

Ein Verfahren zur Herstellung des Verschlusszapfens besteht aus den Verfahrensschritten
Einfügen der Hülse mit den Rastfedern in die Sacklochbohrung der Rolle und Aufschieben der Hülse zusammen mit der Rolle auf den Bundbolzen. Insbesondere bei dem zweiten Verfahrensschritt wird die Hülse über einen zylindrischen Schieber auf den Bundbolzen aufgeschoben.

Weitere vorteilhafte Ausgestaltungen ergeben sich aus den Zeichnungen. Es zeigt:
- Fig. 1: einen Verschlussbolzen im montierten Zustand,
- Fig. 2: ein erstes Ausführungsbeispiel eines Verschlussbolzens in einer Explosionsdarstellung,
- Fig. 3: ein zweites Ausführungsbeispiel eines Verschlussbolzens in einer Explosionsdarstellung,
- Fig. 4 bis 7: einen möglichen Montageablauf des Verschlusszapfens und
- Fig. 8: eine Hülse in perspektivischer Darstellung.

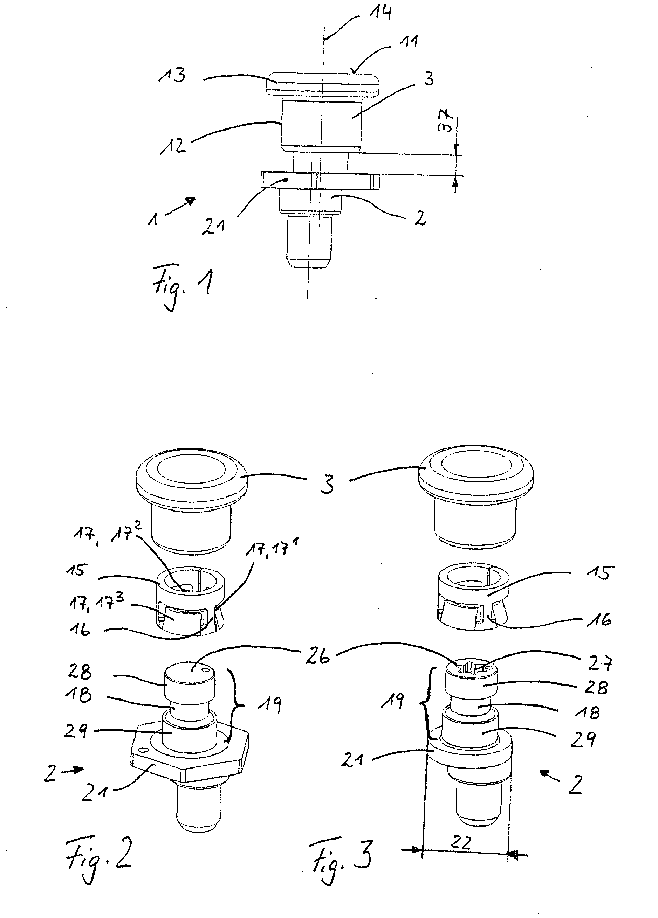

In der Fig. 1 ist der Verschlussbolzen mit 1, ein Bundbolzen mit 2 und eine an dem Bundbolzen 2 drehbar angebrachte Rolle mit 3 bezeichnet. Die Rolle 3 besitzt eine Pilzkopf-Form, bei der das von der - hier nicht dargestellten - Treibstange abgelegene Ende 11 der Rolle 3 mit einem gegenüber dem Hals 12 im Durchmesser vergrößerten Kopf 13 versehen ist. Der Bundbolzen 2 und die Rolle 3 sind in axialer Richtung - entlang der Linie 14 - relativ zueinander verschiebbar sind.

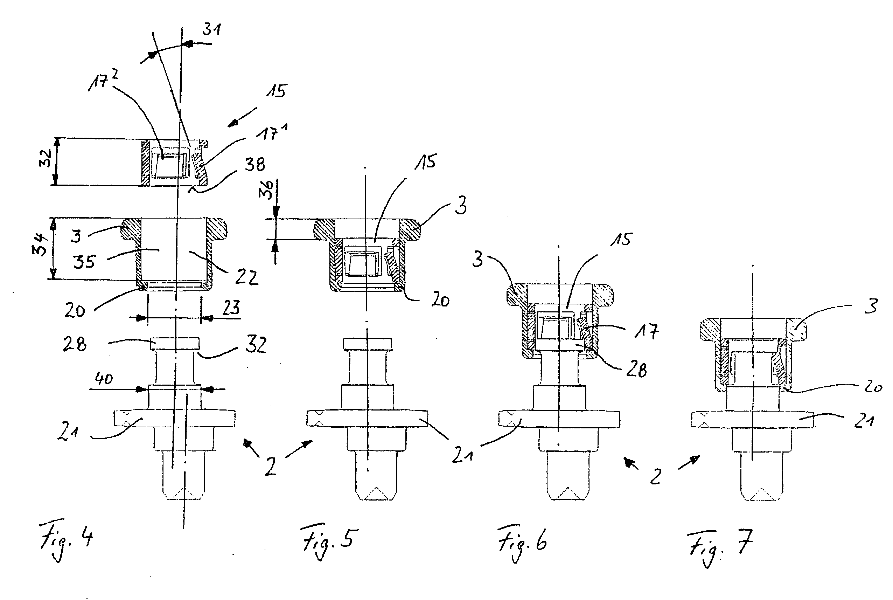

Aus den Fign. 2 und 3 ist erkennbar, dass zwischen der Rolle 3 und dem Bundbolzen 2 eine Hülse 15 angeordnet ist. Die Hülse 15 bildet eine Rastvorrichtung, welche die Rolle 3 und den Bundbolzen 2 gegeneinander festlegt. Dazu ist die Hülse 15 mit von der Mantelfläche 16 in Richtung des Bundbolzens 2 - also nach innen - mit einteilig an dieser angeformten, vorstehenden Rastzungen 17 versehen, welche in eine Einschnürung 18 eines zylindrischen Abschnitts 19 des Bundbolzens 2 eingreifen, wie insbesondere der Fig. 7 entnommen werden kann. Gleichzeitig stützt sich die Hülse 15 an einem nach innen vorragenden Bund 20 der Rolle 3 ab, so dass die Rolle 3 in axialer Richtung einerseits durch die an den Bund 20 anschlagende Hülse 15 und anderseits durch den Bund 21 festgelegt ist. Der Bund 21 ist im Durchmesser 22 (Fig. 3) größer bemessen als der Innendurchmesser 23 der durch den Bund 19 gebildeten Sacklochbohrung 22.

Durch den Bund 21 stützt sich die Rolle 3 ab und wird von einer ggf. vorhandenen Treibstange oder Stulpschiene beabstandet. Zudem bildet die Rolle 3 zusammen mit dem Bundbolzen 2 ein einziges, leicht zu handhabendes Bauteil, welches im montierten Zustand an einer Treibstange angebracht werden kann.

Ausweislich der Fign. 1 und 2 ist vorgesehen, dass der Bundbolzen 2 einen zu dem Abschnitt 19 exzentrisch verlaufenden Befestigungsansatz 24 hat. Gleichzeitig besitzt der Bund 21 eine Außenkontur, die einen Werkzeugangriff ermöglicht. Dadurch ist eine Anpassung des Anpressdrucks des Verschlussbolzens 1 möglich. Damit können handelsübliche Werkzeuge verwendet werden können, bildet der Bund 21 einen Sechskant 25, der mit einem Schraubenschlüssel gedreht werden kann.

Alternativ oder zusätzlich dazu kann die in der Fig. 3 dargestellte Ausführung verwendet werden. Hier weist der Bundbolzen 2 an seiner Stirnfläche 26 einen Werkzeugeingriff 27 auf und der Bundbolzen 2 besitzt ebenfalls einen zu dem Abschnitt 19 exzentrisch verlaufenden Befestigungsansatz 24. Dadurch wird auf den Werkzeugangriff an dem Bund verzichtet und dieser in den Kopf des Bundbolzens 2 verlagert. Gleichwohl stützt sich auch hier die Rolle 2 an dem Bund 21 ab.

Um den geringeren Querschnitt des Kopfes 28 bzw. des Abschnitts 19 des Bundbolzens 2 nicht zusätzlich zu schwächen ist der Werkzeugeingriff als ein Vielzahn, insbesondere als ein Torx-Eingriff, ausgebildet.

Wie vorstehend bereits beschrieben ist die Einschnürung 18 des Bundbolzens 2 in dem zylindrischen Abschnitt 19 angebracht. Der verbleibende Kopf 28 des Bundbolzens 2 hat daher den gleichen Durchmesser wie der Schaft 29 (Fig. 4), so dass die Hülse 15 im wesentlichen zylindrisch ausgebildet ist.

Anhand der Fig. 4 in Verbindung mit den Fign. 2 und 3 ist erkennbar, dass an der Hülse 15 drei über den Umfang verteilte Rastzungen 17¹, 17², 17³ angebracht sind. Abweichend von der Darstellung können auch mehr als drei Rastzungen 17 vorgesehen werden.

Dadurch ist eine sichere Abstützung der Hülse 15 an dem Bundbolzen 2 gewährleistet und ein Kippen der Hülse 15 an dem Bundbolzen 2 erschwert. Es ist ferner an Hand der Rastzunge 17¹ in der Fig. 4 ersichtlich, dass die Rastzungen 17 durch einen von der Mantelfläche 30 nach innen geneigten, einteilig mit der Hülse 3 geformten Materialabschnitt gebildet werden, der unter einem Winkel 31 geneigt ist. Vorzugsweise ist der Winkel 31 spitz ausgeführt, so dass die Rastzungen 17 bei der Montage eine Führungsschräge bilden, die durch den Kopf 28 leicht verschoben werden kann. Verrasten die Rastzungen 17 hinter dem Kopf 28, dann nehmen die Rastzungen 17 einen stumpfen Winkel zur Widerlagerkante 31 an dem Kopf 28 ein, so dass ein Lösen der Verbindung eine besonders hohe Kraft erfordert.

Um die notwendigen elastischen Eigenschaften zu erreichen ist die Hülse 15 aus einem Federstahl hergestellt. Diese Materialauswahl erlaubt eine besonders belastungsfähige Auslegung des Verschlussbolzens 1. Zudem sind die Federstähle chemisch neutral, so dass bei der Materialauswahl der Rolle 3 und des Bundbolzens 2 Probleme der Kontaktkorrosion gering sind. Es kann alternativ natürlich auch vorgesehene werden, dass die Hülse 15 für geringere mechanische Belastungen aus Kunststoff hergestellt ist.

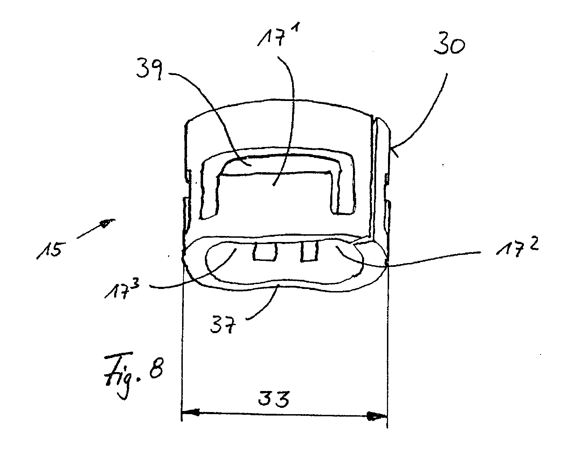

Die Hülse 15 besitzt eine Höhe 32, welche kleiner bemessen ist als eine dem Außendurchmesser 33 (Fig. 8) der Hülse 15 zugeordnete Tiefe 34 der Sacklochbohrung 35 der Rolle 3. Dementsprechend steht die Hülse 15 gegenüber der Rolle 3 um das Maß 36 zurück (Fig. 5), welches mit dem Maß 37 übereinstimmt, welches die Rolle 3 maximal von dem Bund 21 beabstandet sein kann (Fig. 1). Durch diese Abstimmung ist die Rolle 3 relativ zu der Hülse 15 axial verschiebbar und kann sich ggf. selbstständig an ein abweichendes Abstandmaß des Rahmens zu einem Flügel anpassen. In der maximalen Verschiebelage der Rolle 3 zu dem Bundbolzen 2 ist die Lage und Abmessung der Einschnürung 18 und des Schaftes 29 so ausgelegt, dass sich die Rolle 3 mit dem Bund 20 an dem Schaft 29 abstützt. Dadurch wird auch in dieser Relativlage erreicht, dass die Rolle 3 an dem Bundbolzen 2 sicher abgestützt ist. Dazu trägt bei, dass der Durchmesser 21 an dem Bund 20 der Rolle 3 und der Durchmesser 40 des Schaftes 29 spielarm aufeinander abgestimmt sind, so dass es bei einer Belastung der Rolle 3 durch radiale Kräfte nicht oder nur zu einer geringen Neigung der Rolle 3 kommt.

Zusätzlich kann dabei vorgesehen werden, dass an der Mantelfläche 30 der Hülse 3 nach außen vorstehende Rastnasen und zumindest zwei in der Wandfläche der Sachlochbohrung 35 angebrachten Nuten vorgesehen sind. Vorzugsweise sind die Nuten im Bereich des Kragens am Kopf 15 der Rolle 3 angebracht, da hier eine größere Materialstärke an der Rolle 3 bereit steht. Dies erlaubt eine Festlegung der Rolle 3 relativ zu dem Bundbolzen 2 bzw. der Hülse 15. Dadurch kann die Anpassung an verschiedene Abstandsabmessungen des Flügels und des Rahmens dauerhaft vorgenommen werden und bleibt auch dann erhalten, wenn der Verschlussbolzen z.B. eine senkrechte Lage einnimmt.

Anhand der Fign. 4 bis 7 ist der Montageablauf des Verschlussbolzens 1 erkennbar. In der Montagereihenfolge wird ein selbstständig zu schützendes Verfahren gesehen, für den Schutz beansprucht werden kann.

In einem ersten Montageschritt wird entsprechend der Fig. 5 die Hülse 3 in die Sachlochbohrung 35 eingebracht. Die Hülse 15 liegt mit ihrem unteren Rand 38 an dem Bund 20 an. Optional kann hier noch vorgesehen werden, dass Schmierstoffe zugefügt werden, die sich im Bereich der durch die Rastfedern 17 gebildeten Öffnungen sammeln können, so dass diese als Schmierstoffspeicher wirken. Anschließend wird die Hülse 15 zusammen mit der Rolle 3 auf den Bundbolzen 2 aufgeschoben. Dabei wird Druck vorwiegend oder ausschließlich auf die Hülse 15 ausgeführt und die Rolle 3 mit der Hülse 15 mitgenommen. Die Rastfedern 17 werden durch den Kopf 28 nach außen ausgelenkt (Fig. 6). Schließlich hintergreifen die Rastzungen 17 den Kopf 28 und legen die Hülse 15 in axialer Richtung relativ zu dem Bundbolzen 2 fest.

In der Fig. 8 ist die Hülse 15 als Einzelteil dargestellt. Hierbei soll das Ausführungsbeispiel eine aus Metall - vorzugsweise Federstahl - bestehende Hülse 15 zeigen. Die Hülse 15 wird hierbei aus einem Blechstreifen hergestellt. Dazu werden aus dem flachen Blechstreifen die Rastzungen 17 an drei Seiten abgetrennt und entsprechend dem Winkel 31 abgebogen. Aufgrund der geringen Materialstärke ist ein Freischneiden der Rastzungen 17 möglich, so dass in der Mantelfläche 30 ein Fenster 39 entsteht, welches größer bemessen ist als die verbleibenden Rastzunge 17¹, 17², 17³. Der Zwischenraum zwischen den Fenstern 37 und den Rastzungen 17 kann, wie bereits vorstehend erläutert, für eine Schmierstoffansammlung genutzt werden. Anschließend wird der Blechstreifen zu der Hülse 15 gerollt.

Dadurch bleibt die Hülse 15 in Längsrichtung geschlitzt. Hierbei ist ferner vorgesehen, dass der Außendurchmesser 33 der Hülse 15 im unverbauten Zustand geringfügig größer ausgeführt ist, als der Innendurchmesser 41 der Rolle 3. Durch den Längsschlitz und die vorgenannte Auslegung der Hülse 15 wird diese beim Einführen in die Sacklochbohrung 35 geringfügig zusammengedrückt und fixiert sich über einen Reibschluss an der Rolle 3 (Fig. 5). Zudem lässt sich die Rolle 3 dadurch in axialer Richtung stufenlos gegenüber der Hülse 15 bzw. dem Bundbolzen 2 verschieben und fixieren.

Aus der Fig. 8 ist noch ersichtlich, dass der Rand 37 wellenförmig ausgestaltet ist, so dass die Hülse 15 und die Rolle 3 nicht vollflächig aneinander liegen. Dies vermindert die, zwischen Rolle 3 und der Hülse 15 unvermeidliche Reibung und sorgt auch hier für eine Schmierstoffeinlagerung.

Alternativ dazu kann die Hülse 15 auch in einem hier nicht dargestellten Ausführungsbeispiel zweiteilig ausgestaltet sein. Dazu bildet jeder der beiden Teile der Hülse 15 eine dreizackige Krone. In der an dem Bund 20 anliegenden Krone sind die Rastzungen 17 wie bereits vorstehend beschrieben angebracht. Jede der Zacken dieser Krone enthält zudem noch ein Fenster. Die Zacken der zweiten Krone besitzen Rasthaken, welche in die Fensteröffnungen der ersten Krone eintreten und hinter diesen verrasten können. Die Montage sieht dabei vor, dass zunächst die Rolle 3 zusammen mit der ersten Krone an dem Bundbolzen 2 befestigt wird. Aufgrund der (gegenüber dem Ausführungsbeispiel nach Fig. 8) fehlenden Ringverbindung entlang des freien Endes der Zungen 17 ergibt sich ein Freiraum zwischen der Rolle 3 und dem Kopf 28 des Bundbolzens 2. Hier hinein wird die zweite Krone eingeführt, so dass der die Zacken dieser zweiten Krone verbindende Ring an dem Kopf 28 anliegt. Greifen die vorstehend bereits erwähnten Rasthaken in die Fenster der Zacken der ersten Krone, ist die zweite Krone an der ersten Krone in axialer Richtung festgelegt.

Es ergibt sich aus dieser Ausführung ein Vorteil in Hinsicht auf die Stabilität der Verbindung der Rolle 3 und der solchermaßen zusammengesetzten Hülse 15. Bei einem Herausziehen der Rolle durch starke axiale Kräfte in Richtung der Linie 14 (Fig. 1), kommt es gegebenenfalls zu einem Ausknicken der Rastzungen 17. Durch die zuletzt beschriebene Ausführung wird das Ausknicken dadurch erschwert, dass jede bereits in der Einschnürung des Bundbolzens verrastete Rastzunge 17 durch eine zweite Zunge der zweiten Krone gegen die Rolle 3 abgestützt wird. Dementsprechend verkeilen sich die Kronen bei einer solchen Bewegung ineinander und verklemmen schließlich.

Abschließend sei darauf hingewiesen, dass die Hülse 15 auch als Zylinder ausgebildet sein kann. Diese Ausgestaltung des Verschlussbolzens kann allerdings keine axialen Kräfte aufnehmen.

### Bezugszeichenliste

- 1: Verschlussbolzen
- 2: Bundbolzen
- 3: Rolle
- 11: Ende
- 12: Hals
- 13: Kopf
- 14: Linie
- 15: Hülse
- 16: Mantelfläche
- 17, 17¹, 17², 17³: Rastzungen
- 18: Einschnürung
- 19: Abschnitt
- 20: Bund
- 21: Bund
- 22: Durchmesser
- 23: Innendurchmesser
- 24: Befestigungsansatz
- 25: Sechskant
- 26: Stirnfläche
- 27: Werkzeugeingriff
- 28: Kopf
- 29: Schaft
- 30: Mantelfläche
- 31: Widerlagerkante
- 32: Höhe
- 33: Außendurchmesser
- 34: Tiefe
- 35: Sacklochbohrung
- 36: Maß
- 37: Rand
- 38: Rand
- 39: Fenster
- 40: Durchmesser

## Patentansprüche

1. Verschlussbolzen von Verriegelungsbeschlägen für Fenster oder Türen, mit einem an einer verschiebbaren Treibstange befestigten Bundbolzen (2) und einer an dem Bundbolzen (2) drehbar gelagerten Rolle (3), insbesondere bei dem die Rolle (3) eine Pilzkopf-Form aufweist, bei der das von der Treibstange abgelegene Ende (11) der Rolle (3) mit einem gegenüber dem Hals (12) im Durchmesser vergrößerten Kopf (13) versehen ist und wobei die Rolle (3) und der Bundbolzen (2) über eine Rastvorrichtung gegeneinander festlegbar sind,
**dadurch gekennzeichnet,**
**dass** die Rastvorrichtung aus einer Hülse (15) besteht, die mit von der Mantelfläche (30) in Richtung des Bundbolzens (2) vorstehenden Rastzungen (17) versehen ist, welche in eine Einschnürung (18) des Bundbolzens (2) eingreifen.

2. Verschlussbolzen nach Anspruch 1,
**dadurch gekennzeichnet,**
**dass** die Einschnürung (18) des Bundbolzens (2) in einem zylindrischen Abschnitt (19) angebracht ist.

3. Verschlussbolzen nach einem der Ansprüche 1 oder 2,
**dadurch gekennzeichnet,**
**dass** an der Hülse (15) mehrere, vorzugsweise drei, über den Umfang verteilte Rastzungen (17¹, 17², 17³) angebracht sind.

4. Verschlussbolzen nach einem der Ansprüche 1 bis 3,
**dadurch gekennzeichnet,**
**dass** der Bundbolzen (2) einen Bund (21) aufweist, der im Durchmesser größer bemessen ist als der Innendurchmesser der Rolle (3).

5. Verschlussbolzen nach Anspruch 4,
**dadurch gekennzeichnet,**
**dass** der Bundbolzen (2) einen zu dem Abschnitt (19) exzentrisch verlaufenden Befestigungsansatz (24) aufweist und der Bund (21) eine Außenkontur aufweist, die einen Werkzeugangriff ermöglicht.

6. Verschlussbolzen nach Anspruch 5,
**dadurch gekennzeichnet,**
**dass** der Bund (21) einen Sechskant bildet.

7. Verschlussbolzen nach einem der Ansprüche 1 bis 4,
**dadurch gekennzeichnet,**
**dass** der Bundbolzen (2) an seiner Stirnfläche (26) einen Werkzeugeingriff (27) aufweist und der der Bundbolzen (2) einen zu dem Abschnitt (19) exzentrisch verlaufenden Befestigungsansatz (24) besitzt.

8. Verschlussbolzen nach einem der Ansprüche 1 bis 7,
**dadurch gekennzeichnet, dass** die Hülse (3) eine Höhe (32) aufweist, welche kleiner bemessen ist, als eine dem Außendurchmesser der Hülse (3) zugeordnete Sacklochbohrung (35) der Rolle (3).

9. Verschlussbolzen nach einem der Ansprüche 1 bis 8,
**dadurch gekennzeichnet,**
**dass** an der Mantelfläche (30) der Hülse (15) nach außen vorstehende Rastnasen und zumindest zwei in der Wandfläche der Sacklochbohrung der Rolle (3) angebrachten Nuten vorgesehen sind.

10. Verschlussbolzen nach einem der Ansprüche 1 bis 9,
**dadurch gekennzeichnet,**
**dass** die Rastzungen (17) einteilig aus der Hülse (3) geformt sind

11. Verschlussbolzen nach einem der Ansprüche 1 bis 9,
**dadurch gekennzeichnet,**
**dass** die Hülse (15) aus einem Federstahl hergestellt ist.

12. Verschlussbolzen nach einem der Ansprüche 1 bis 10,
**dadurch gekennzeichnet,**
**dass** der Durchmesser (22) an dem Bund (20) der Rolle und der Durchmesser des Schaftes (29) abgestimmt sind.

13. Verschlussbolzen nach einem der Ansprüche 1 bis 12,
**dadurch gekennzeichnet,**
**dass** die Hülse (15) geschlitzt ausgeführt ist und dass der Außendurchmesser (33) der Hülse (15) geringfügig größer ausgeführt ist als der Innendurchmesser (41) der Rolle (3).

14. Verschlussbolzen nach einem der Ansprüche 1 bis 13,
**dadurch gekennzeichnet,**
**dass** die Rolle (3) gegenüber dem Bundbolzen (2) um das Maß (37) verschiebbar ausgeführt ist.

## Claims

1. A closure bolt of locking fittings for windows or doors, with a collar bolt (2) which is fastened to a displaceable driving rod, and with a roller (3) which is mounted rotatably on the collar bolt (2), in particular in which the roller (3) has a mushroom-head shape in which that end (11) of the roller (3) which is remote from the driving rod is provided with a head (13) which is enlarged in diameter in comparison to the neck (12), and wherein the roller (3) and the collar bolt (2) can be fixed in relation to each other via a latching device, **characterized in that** the latching device comprises a sleeve (15) which is provided with latching tongues (17) which protrude from the circumferential surface (30) in the direction of the collar bolt (2) and engage in a constriction (18) of the collar bolt.

2. The closure bolt according to claim 1,
**characterized in that**
the constriction (18) of the collar bolt (2) is mounted in a cylindrical section(19).

3. The closure bolt according to any one of claims 1 or 2,
**characterized in that**
a plurality of latching tongues (17¹, 17², 17³), preferably three, distributed across the periphery are mounted to the sleeve (15).

4. The closure bolt according to any one of claims 1 to 3,
**characterized in that** the collar bolt (2) comprises a collar (21) which, in terms of the diameter, is larger than the internal diameter of the roller (3).

5. The closure bolt according to claim 4,
**characterized in that**
the collar bolt (2) comprises a fastening extension (24) disposed eccentrically with respect to the section(19) and the collar (21) has an outer contour that enables a tool engagement.

6. The closure bolt according to claim 5,
**characterized in that**
the collar (21) forms a hexagon.

7. The closure bolt according to any one of claims 1 to 4,
**characterized in that**
the collar bolt (2) comprises a tool engagement (27) on the front face (26) thereof and the collar bolt (2) has a fastening extension (24) eccentrically disposed with respect to the section (19).

8. The closure bolt according to any one of claims 1 to 7,
**characterized in that**
the sleeve (3) has a height (32) which is dimensioned smaller than a blind bore (35) of the roller (3) associated with the outer diameter of the sleeve (3).

9. The closure bolt according to any one of claims 1 to 8,
**characterized in that**
outwardly protruding latching lugs are provided on the circumferential surface (30) of the sleeve (15), and at least two grooves are provided which are arranged in the wall surface of the blind bore of the roller (3).

10. The closure bolt according to any one of claims 1 to 9,
**characterized in that**
the latching tongues (17) are integrally formed from the sleeve (3).

11. The closure bolt according to any one of claims 1 to 9,
**characterized in that**
the sleeve (15) is made from spring steel.

12. The closure bolt according to any one of claims 1 to 10,
**characterized in that**
the diameter (22) on the collar (20) of the roller and the diameter of the shaft (29) are matched.

13. The closure bolt according to any one of claims 1 to 12,
**characterized in that**
the sleeve (15) is of slotted design and that the outer diameter (33) of the sleeve (15) is slightly larger than the inner diameter (41) of the roller (3).

14. The closure bolt according to any one of claims 1 to 13,
**characterized in that**
the roller (3) is displaceable by the distance (37) relative to the collar bolt (2).

## Revendications

1. Boulon de fermeture de ferrures de verrouillage pour fenêtres ou portes, avec un boulon à bride (2), qui est fixé sur une tringle de manoeuvre déplaçable, et avec un cylindre (3), monté à rotation sur le boulon à bride (2), le cylindre (3) présentant en particulier une tête en forme de champignon et l'extrémité (11) du cylindre (3), opposée à la tringle de manoeuvre, étant pourvue d'une tête (13) dont le diamètre est plus grand que celui du cou (12), sachant que le cylindre (3) et le boulon à bride (2) peuvent être fixés l'un par rapport à l'autre au moyen d'un dispositif d'arrêt, **caractérisé en ce que** le dispositif d'arrêt consiste en une douille (15), qui est pourvue de languettes d'arrêt (17) en saillie de la paroi latérale (30), en direction du boulon à bride (2), qui s'engagent dans un rétrécissement (18) du boulon à bride (2).

2. Boulon de fermeture selon la revendication 1, **caractérisé en ce que** le rétrécissement (18) du boulon à bride (2) est pratiqué dans une partie cylindrique (19).

3. Boulon de fermeture selon revendication 1 ou 2, **caractérisé en ce que** plusieurs, de préférence trois languettes d'arrêt (17¹, 17², 17³) sont réparties sur la périphérie de la douille (15).

4. Boulon de fermeture selon revendication 1 à 3, **caractérisé en ce que** le boulon à bride (2) présente une bride (21), dont le diamètre est plus grand que le diamètre intérieur du cylindre (3).

5. Boulon de fermeture selon la revendication 4, **caractérisé en ce que** le boulon à bride (2) présente un embout de fixation (24), qui s'étend excentriquement par rapport à la partie (19), et que la bride (21) présente un contour extérieur, qui permet la mise en oeuvre d'un outil.

6. Boulon de fermeture selon la revendication 5, **caractérisé en ce que** la bride (21) a la forme d'un hexagone.

7. Boulon de fermeture selon l'une des revendications 1 à 4, **caractérisé en ce que** le boulon à bride (2) présente, sur sa face frontale (26), une prise d'outil (27) et que le boulon à bride (2) est pourvu d'un embout de fixation (24), qui s'étend excentriquement par rapport à la partie (19).

8. Boulon de fermeture selon l'une des revendications 1 à 7, **caractérisé en ce que** la douille (15) présente une hauteur (32), qui est inférieure à celle d'un alésage en trou borgne (35) du cylindre (3) associé au diamètre extérieur de la douille.

9. Boulon de fermeture selon l'une des revendications 1 à 8, **caractérisé en ce que** des nez d'encliquetage en saillie vers l'extérieur sont prévus sur la paroi latérale (30) de la douille (15) et au moins deux rainures sont pratiquées dans la paroi du trou borgne du cylindre (3).

10. Boulon de fermeture selon l'une des revendications 1 à 9, **caractérisé en ce que** les languettes d'arrêt (17) sont formées d'une pièce à partir de la douille.

11. Boulon de fermeture selon l'une des revendications 1 à 9, **caractérisé en ce que** la douille (15) est réalisée en acier à ressort.

12. Boulon de fermeture selon l'une des revendications 1 à 10, **caractérisé en ce que** le diamètre (22) de la bride (20) du cylindre et le diamètre de la tige (29) concordent.

13. Boulon de fermeture selon l'une des revendications 1 à 12, **caractérisé en ce que** la douille (15) est fendue et que le diamètre extérieur de la douille (15) est légèrement plus grand que le diamètre intérieur (41) du cylindre (3).

14. Boulon de fermeture selon l'une des revendications 1 à 13, **caractérisé en ce que** le cylindre (3) est exécuté de sorte à pouvoir être déplacé de la dimension (37) par rapport au boulon à bride (2).
